(19) Europäisches Patentamt
European Patent Office
Office européen des brevets

(11) EP 0 568 123 B1

(12) EUROPÄISCHE PATENTSCHRIFT

(45) Veröffentlichungstag und Bekanntmachung des Hinweises auf die Patenterteilung:
10.09.1997 Patentblatt 1997/37

(51) Int Cl.⁶: **H02M 3/155**, H02M 3/335

(21) Anmeldenummer: 93200840.2

(22) Anmeldetag: 24.03.1993

(54) **Verlustarme Stromversorgungseinrichtung mit einem Gleichspannungswandler**

Low loss power supply apparatus with a d.c converter

Dispositif d'alimentation en courant à faibles pertes avec un convertisseur continu-continu

(84) Benannte Vertragsstaaten:
DE FR GB IT

(30) Priorität: 02.04.1992 DE 4210980

(43) Veröffentlichungstag der Anmeldung:
03.11.1993 Patentblatt 1993/44

(73) Patentinhaber: LUCENT TECHNOLOGIES INC.
Murray Hill, New Jersey 07974-0636 (US)

(72) Erfinder: Zimmermann, Andreas
W-2000 Hamburg 1 (DE)

(74) Vertreter: **Tergau, Enno, Dipl.-Ing. et al**
**Tergau & Pohl**
**Patentanwälte**
**Mögeldorfer Hauptstrasse 51**
**90482 Nürnberg (DE)**

(56) Entgegenhaltungen:
EP-A- 0 027 171      EP-A- 0 123 085
EP-A- 0 357 265      EP-A- 0 446 490
DE-A- 3 534 580

**Beschreibung**

Die Erfindung betrifft eine Stromversorgungseinrichtung zur Erzeugung mindestens einer Ausgangsspannung insbesondere aus einer gegenüber der Ausgangsspannung betragsmäßig größeren Eingangsspannung.

Für die Versorgung elektronischer Geräte werden Stromversorgungseinrichtungen mit Gleichspannungswandlern benötigt, die eine oder mehrere Ausgangsspannungen liefern. Bei getakteten Gleichspannungswandlern sind insbesondere die Grundtypen Sperrwandler und Durchflußwandler zu unterscheiden. Dabei wird eine Eingangsgleichspannung mit Hilfe eines steuerbaren Schalters in eine Rechteckspannung umgewandelt, die gleichgerichtet und geglättet wird.

Aus EP 27 171-A1 ist eine Stromversorgungseinrichtung mit einem Gleichspannungswandler bekannt, der wie in Figur 2 der EP 27 171-A1 dargestellt ist, als Durchflußwandler ausgebildet ist. Der Gleichspannungswandler weist einen Primärkreis mit einem Eingangskondensator auf, an dem eine Eingangsspannung anschließbar ist. Parallel zum Eingangskondensator liegt eine Primärwicklung eines Transformators in Reihe mit der Schaltstrecke eines als Transistor ausgebildeten steuerbaren Schalters, der von einer sekundärseitigen Regelschaltung ansteuerbar ist, sowie in Reihe mit einem Ausgangskondensator. Die Sekundärseite weist eine Sekundärwicklung in Reihe mit einer Gleichrichterdiode und dem Ausgangskondensator auf, an dem eine Ausgangsspannung abgreifbar ist. Hierbei muß die gesamte Leistung über den Wandler übertragen werden, so daß dieser entsprechend groß dimensioniert sein muß.

Aus EP-A-0 357 265 ist eine Stromversorgungseinrichtung der eingangs genannten Art bekannt, wobei ein Gleichspannungswandler mit einem Primärkreis und einem Sekundärkreis vorgesehen ist. Dabei liegt die Primärwicklung in Serie mit den Elementen des Primärkreises, so daß der gesamte Eingangsstrom durch Drossel des Wandlers auf der Primärseite fließt und dieser die komplette Leistung übertragen muß. Des weiteren wird der Gleichsspannungswandler nicht mit einer über einem Längsregler abfallenden Differenzspannung aus Ausgangs- und Eingangsspannung betrieben. Daher muß der Wandler entsprechend groß dimensioniert werden und erzeugt im Längsregler eine große, abzuführende Verlustleistung.

Der Erfindung liegt die Aufgabe zugrunde, eine Stromversorgungseinrichtung der eingangs genannten Art anzugeben, die eine geringe Verlustleistung sowie einen geringen Platzbedarf aufweist.

Diese Aufgabe wird bei einer Stromversorgungseinrichtung der eingangs genannten Art dadurch gelöst, daß die Stromversorgungseinrichtung die im Patentanspruch 1 aufgeführten Merkmale enthält.

Die Ausgangsspannung wird dabei gleichzeitig durch den Längsregler und den Gleichspannungswandler erzeugt. Der Gleichspannungswandler wird mit einer Speisespannung betrieben, die aus der Differenzspannung aus Ausgangs- und Eingangsspannung gebildet wird. Damit wird der Gleichspannungswandler mit einer ansonsten vom Längsregler erzeugten Verlustleistung betrieben. Der Gleichspannungswandler ist dabei so dimensioniert, daß er ebenfalls die Ausgangsspannung liefert. Hierdurch ergibt sich ein hoher Wirkungsgrad der Stromversorgungseinrichtung. Der Gleichspannungswandler muß dabei nur einen kleinen Teil der Gesamtleistung übertragen und kann entsprechend kleiner und platzsparender dimensioniert werden.

Eine Einsparung von Bauteilen wird dadurch erreicht, daß der Längsregler aus dem Primärkreis des Gleichspannungswandlers gebildet wird, wobei der Primärkreis in Reihe mit dem Sekundärkreis geschaltet ist. Die Eingangsspannung liegt dabei nicht an beiden Eingangsklemmen des Primärkreises des Gleichspannungswandlers, sondern lediglich an einer Eingangsklemme, sowie an einer dem Primär- und Sekundärkreis gemeinsamen Ausgangsklemme. Der Gesamtwirkungsgrad der Stromversorgungseinrichtung ergibt sich aus dem Wirkungsgrad des aus Primär- und Sekundärkreis gebildeten Gleichspannungswandlers und aus dem Verhältnis von Ausgangsspannung zur Eingangsspannung. Der Gesamtwirkungsgrad ist dabei immer besser als bei Verwendung eines herkömmlichen Gleichspannungswandlers, wenn die Eingangsspannung betragsmäßig größer als die Ausgangsspannung ist.

Weist der Primärkreis mindestens einen Eingangskondensator und der Sekundärkreis mindestens einen in Reihe zum Eingangskondensator angeordneten Ausgangskondensator auf, wobei die Reihenschaltung aus dem Eingangskondensator und aus dem Ausgangskondensator zum Anlegen der Eingangsspannung und der Ausgangskondensator zum Abgreifen der Ausgangsspannung vorgesehen ist, so liegt am Eingangskondensator die Differenzspannung, die sich aus der Differenz der Ausgangs- und Eingangsspannung zusammensetzt. Dies hat den Vorteil, daß der Eingangskondensator lediglich für diese Differenzspannung dimensioniert werden muß und damit eine wesentlich kleinere Bauform aufweisen kann.

Ein Schutz gegen Verpolung für den Eingangskondensator bei Überspannungen der Ausgangsspannung wird dadurch erreicht, daß der Primärkreis über eine Diode in Reihe zum Sekundärkreis geschaltet ist.

Dadurch, daß der Primärkreis zum Anlegen einer aus Ausgangs- und Eingangsspannung gebildeten Differenzspannung vorgesehen ist, wird ermöglicht, daß der Gleichspannungswandler kleiner und platzsparender dimensioniert werden kann.

Eine mögliche Realisierung des Gleichspannungswandlers, bei der der Sekundärkreis als Sperrwandler arbeitet, ergibt sich dadurch, daß der Primärkreis eine Primärwicklung und der Sekundärkreis eine Sekundärwicklung aufweisen, die gegensinnig gepolt sind.

Als weitere Variante des Gleichspannungswandlers, bei der der Gleichspannungswandler als Durchflußwandler arbeitet, ist dann gegeben, wenn der Primärkreis eine Primärwicklung und der Sekundärkreis eine Sekundärwicklung aufweisen, die gleichsinnig gepolt sind.

Der Gleichspannungswandler kann auf einfache Weise mit geringem Aufwand dadurch geregelt werden, daß der Gleichspannungswandler eine Regeleinrichtung zur Steuerung der Einschaltzeiten des steuerbaren Schalters aufweist, wobei zur Erzeugung einer die Regeleinrichtung speisenden Hilfsspannung eine weitere Sekundärwicklung eines Primär- und Sekundärwicklung koppelnden Transformators vorgesehen ist.

Weist der Primärkreis einen steuerbaren Schalter zum Betreiben mit einer hohen Taktfrequenz auf, so ergibt sich ein geringes Bauvolumen des Gleichspannungswandlers.

Im folgenden wird die Erfindung anhand der in den Figuren dargestellten Ausführungsbeispielen näher erläutert.

Es zeigen:

Figur 1 eine Prinzipdarstellung einer Stromversorgungseinrichtung,

Figur 2 ein weiteres Prinzipschaltbild einer Stromversorgungseinrichtung,

Figur 3 ein Schaltungsbeispiel für eine Stromversorgungseinrichtung,

Figur 4 ein weiteres Ausführungsbeispiel für eine Stromversorgungseinrichtung und

Figur 5a, b, c, eine Stromversorgungseinrichtung mit möglichen Ausführungsbeispielen für den Gleichspannungswandler.

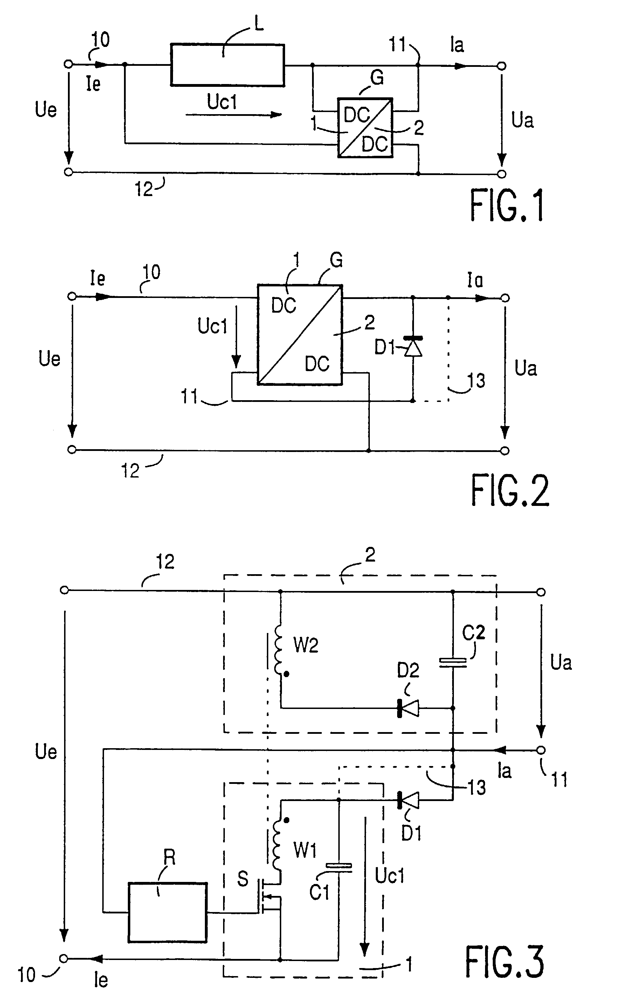

Die in Figur 1 dargestellte Stromversorgungseinrichtung dient zur Erzeugung einer Ausgangsspannung Ua aus einer gegenüber der Ausgangsspannung Ua betragsmäßig größeren Eingangsspannung Ue. Die Eingangsspannung Ue liegt dabei zwischen Eingangsklemmen 10 und 12, während die Ausgangsspannung Ua zwischen Ausgangsklemmen 11 und 12 abgreifbar ist. Die Stromversorgungseinrichtung weist einen Längsregler L auf, an dem eine Differenzspannung $U_{c1}$ abfällt. Die Differenzspannung $U_{c1}$ wird aus der Differenz der Ausgangsspannung Ua und der Einganssspannung Ue gebildet und dient als Eingangsspannung für einen Gleichspannungswandler G, der einen Primärkreis 1 und einen Sekundärkreis 2 aufweist.

Bei der in Figur 1 dargestellten Stromversorgungseinrichtung wird die Ausgangsspannung Ua gleichzeitig durch den Längregler L und den Gleichspannungswandler G erzeugt. Als Speisespannung, d. h. als Eingangsspannung des Gleichspannungswandlers G dient dabei die Differenzspannung $U_{c1}$, d.h. der Gleichspannungswandler G wird mit einer ansonsten am Längsregler L erzeugten Verlustleistung betrieben. Der Gleichspannungswandler G ist so dimensioniert, daß er ebenfalls die Ausgangsspannung Ua liefert. Das Übersetzungsverhältnis von Primärkreis 1 und Sekundärkreis 2 ist dabei so gewählt, daß der Sekundärkreis 2 ebenfalls die Ausgangsspannung Ua erzeugt. Der Gleichspannungswandler G kann kleiner und platzsparender dimensioniert werden, da er nur einen kleinen Teil einer Gesamtleistung Pa übertragen muß, nämlich ca.(Ue-Ua)/Ua * Pa. Der Gesamtwirkungsgrad der in Figur 1 dargestellten Stromversorgungseinrichtung ergibt sich aus dem Wirkungsgrad des Gleichspannungswandlers G und dem Spannungsverhältnis Ua/Ue. Der Gesamtwirkungsgrad ist dabei immer besser als bei Einsatz einer Stromversorgungseinrichtung, die lediglich einen Gleichspannungswandler aufweist.

Figur 2 zeigt ein weiteres Ausführungsbeispiel einer Stromversorgungseinrichtung zur Erzeugung einer zwischen Ausgangsklemmen 11 und 12 anliegenden Ausgangsspannung Ua aus einer betragsmäßig größeren Eingangsspannung Ue, die zwischen Eingangsgklemmen 10 und 12 anliegt. Hierzu wird ein Gleichspannungswandler G verwendet, der einen Primärkreis 1 und einen Sekundärkreis 2 aufweist. Der Gleichspannungswandler G wird von einer zwischen Klemmen 10 und 11 anliegenden Differenzspannung $U_{c1}$ gespeist, die aus der Differenz der Ausgangsspannung Ua und der Eingangsspannung Ue gebildet wird. Der Primärkreis 1 ist über eine Diode D1 in Reihe mit dem Sekundärkreis 2 geschaltet. Durch eine gestrichelte Linie 13 anstelle der Diode D1 ist angedeutet, daß anstelle der Diode D1 auch eine direkte Verbindung vorgesehen sein kann.

Die in Figur 2 dargestellte Stromversorgungseinrichtung kann beispielsweise dann zum Einsatz kommen, wenn aus einer Eingangsspannung Ue eine nur wenig kleinere Ausgangsspannung Ua erzeugt werden soll und dabei die entstehende Verlustleistung und der benötigte Platz möglichst gering sein sollen. Durch die in Serie Schaltung des Primärkreises 1 mit dem Sekundärkreis 2 wird erreicht, daß der Gleichspannungswandler G lediglich einen kleinen Teil der Gesamtleistung übertragen muß. Hierdurch kann der Gleichspannungswandler G kleiner und somit platzsparender dimensioniert werden. Die Eingangsspannung Ue liegt nicht an beiden Eingangsklemmen 10 und 11 des Primärkreises 1 des Gleichspannungswandlers G, sondern lediglich an der Eingangsklemme 10 sowie an der Primär- und Sekundärkreis gemeinsamen Ein-Ausgangsklemme 12. Der Gesamtwirkungsgrad $\eta_{ges}$ der gesamten Stromversorgungseinrichtung ergibt sich aus dem Wirkungsgrad $\eta_w$ des Gleichspannungswandlers G und aus dem Verhältnis aus Ausgangsspannung Ua zur Eingangsspannung Ue folgendermaßen:

$$\eta_{ges} = Ua * Ia / Ue * Ie = Ua / Ue (1 - \eta_w) + \eta_w.$$

Dabei wurde für Ie die Beziehung:

$$Ia = Ie + Ie * \eta_w (Ue - Ua) / Ua$$

eingesetzt. Der Spannungsabfall über der Diode D1 ist dabei nicht berücksichtigt. Unter der Voraussetzung, das $\eta_w < 1$ ist, ist der Gesamtwirkungsgrad immer besser als bei Verwendung eines herkömmlichen Gleichspannungswandlers, wenn die Ausgangsspannung Ua betragsmäßig kleiner als die Eingangsspannung Ue ist. Laborversuche haben ergeben, daß bei einer Schaltfrequenz von ca. 100 kHz ein Gesamtwirkungsgrad $\eta_{ges}$ von ca. 95% erreichbar ist. Die in Figur 2 dargestellte Stromversorgungseinrichtung ist unabhängig vom Typ des eingesetzten Gleichspannungswandlers G. Voraussetzung ist, daß auf eine galvanische Trennung zwischen Primär- und Sekundärseite verzichtet werden kann. Bei Verwendung einer Diode D1, muß die Differenzspannung $U_{c1}$ größer als der Spannungsabfall über der Diode D1 sein.

Figur 3 zeigt ein weiteres Ausführungsbeispiel einer Stromversorgungseinrichtung zur Erzeugung einer Ausgangsspannung Ua aus einer betragsmäßig größeren Eingangsspannung Ue. Die Stromversorgungseinrichtung weist einen Gleichspannungswandler 1 und 2 mit einem Primärkreis 1 und einem Sekundärkreis 2 auf. Der Primärkreis enthält einen steuerbaren Schalter S in Reihe mit einer Primärwicklung W1, wobei parallel zu der Reihenschaltung aus der Schaltstrecke des steuerbaren Schalters S und der Primärwicklung W1 ein Eingangskondensator C1 angeordnet ist. Der Sekundärkreis 2 enthält eine Sekundärwicklung W2 in Reihe mit einer Gleichrichterdiode D2, wobei parallel zu der Reihenschaltung aus der Gleichrichterdiode D2 und der Sekundärwicklung W2 ein Ausgangskondensator C2 angeordnet ist. Der steuerbare Schalter S wird von einer Regeleinrichtung R, beispielsweise einem Pulsbreiten-Modulator angesteuert, der über eine Steuerspannung, die von der Ausgangsspannung Ua abgeleitet wird, regelbar ist. Der Primärkreis 1 ist über eine Verbindung 13 oder über eine Diode D1 in Reihe mit dem Sekundärkreis 2 geschaltet.

Durch die in Reihe Schaltung von Primärkreis 1 und Sekundärkreis 2 liegt am Eingangskondensator C1 des Gleichspannungswandlers 1,2 lediglich eine Differenzspannung $U_{c1}$, die aus der Differenz der Ausgangsspannung Ua und der Eingangsspannung Ue zusammengesetzt ist. Dies hat den Vorteil, daß der Eingangskondensator C1 lediglich für diese Differenzspannung $U_{c1}$ dimensioniert werden muß und damit eine sehr viel kleinere Bauform aufweisen kann. Die Primärwicklung W1 und die Sekundärwicklung W2 sind bei dem in Figur 3 dargestellten Ausführungsbeispiel bezüglich der Differenzspannung $U_{c1}$ und der Ausgangsspannung Ua gegensinnig gewickelt. Während der Leit- und Sperrphase des steuerbaren Schalters S fließt vom Eingang zum Ausgang der Schaltung ein annähernd konstanter Strom, da der Eingangskondensator C1 bereits einen Mittelwert aus Leit- und Sperrphase bildet. Zusätzlich fließt während der Sperrphase ein stetig fallender Strom durch die Sekundärwicklung W2 zum Ausgang. Der Eingangskondensator C1 trägt somit ebenfalls zum Glätten der Ausgangsspannung Ua bei, wodurch der Ausgangskondensator C2 bei gleicher Welligkeit der Ausgangsspannung Ua bedeutend kleiner dimensioniert werden kann.

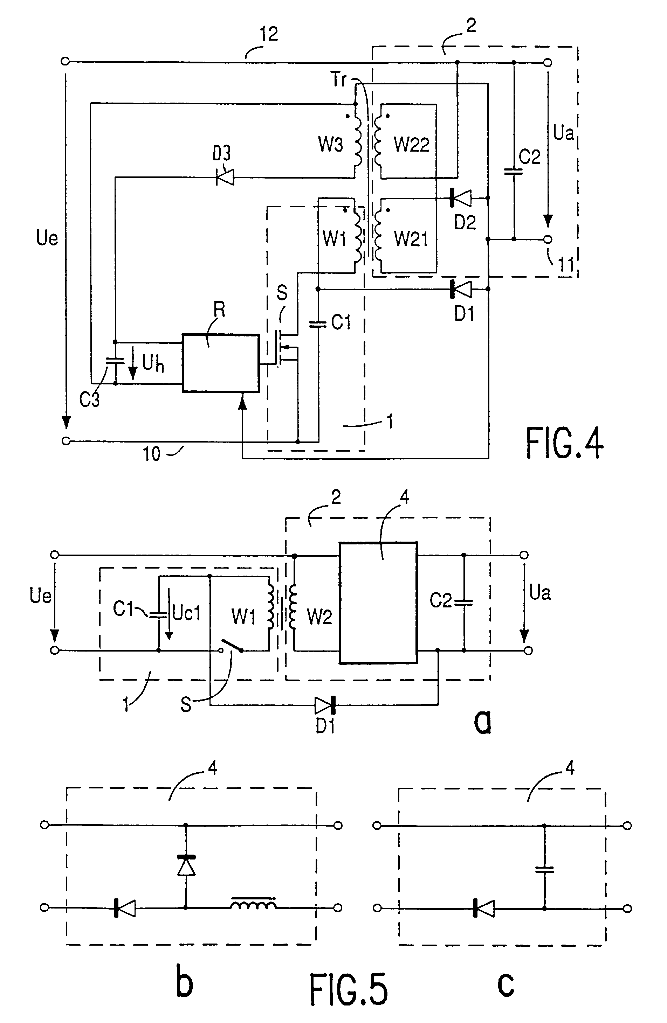

Figur 4 zeigt ein weiteres Ausführungsbeispiel einer Stromversorgungseinrichtung mit einem Primärkreis 1 und einem Sekundärkreis 2. Dabei werden die bereits im Zusammenhang mit den Figuren 1 bis 3 eingeführten Bezugszeichen verwendet. Der Aufbau des Primärkreises 1 entspricht dem in Figur 3 dargestellten Ausführungsbeispiel. Der Sekundärkreis 2 entspricht im wesentlichen ebenfalls der Ausführung des in Figur 3 dargestellten Gleichspannungswandlers. Lediglich die Sekundärwicklung des Transformators Tr des Sekundärkreises 2 wird aus in Reihe geschalteten Wicklungen W21, W22 gebildet. Der Transformator Tr weist darüber hinaus eine weitere Sekundärwicklung W3 auf, an die eine Diode D3 in Reihe mit einem Kondensator C3 angeschlossen ist. An dem Kondensator C3 ist eine Hilfsspannung Uh zur Versorgung der Regeleinrichtung R abgreifbar. Hierzu ist der Kondensator C3 mit der Eingangsklemme 10 des Primärkreises 1 verbunden.

Die Funktion der in Figur 4 dargestellten Stromversorgungseinrichtung entspricht im wesentlichen der im Zusammenhang mit Figur 3 beschriebenen Wirkungsweise. Die Aufteilung der Sekundärwicklung in zwei in Reihe geschaltete Sekundärwicklung W21 und W22 hat den Vorteil, daß hierdurch eine bessere Kopplung zwischen Primär- und Sekundärwicklung erreicht werden kann.

Figur 5a zeigt ein weiteres Ausführungsbeispiel einer Stromversorgungseinrichtung. Dabei werden ebenfalls die im Zusammenhang mit den Figuren 1 bis 4 eingeführten Bezugszeichen verwendet. Im Gegensatz zu den in Figur 3 und 4 dargestellten Stromversorgungseinrichtungen weist der Sekundärkreis 2, der an die Sekundärwicklung W2 des Transformators Tr angeschlossen ist, bei dem in Figur 5a dargestellten Ausführungsbeispiel lediglich einen Block 4 auf, an den der Ausgangskondensator C2 angeschlossen ist. Eine schaltungstechnische Realisierung für diesen Block 4 ist in den Figuren 5b und 5c angegeben. Hieraus wird ersichtlich, daß der in Figur 5a dargestellte Sekundärkreis 2 sowohl als Sperrwandler (Figur 5c) als auch als Durchflußwandler (Figur 5b) ausgebildet sein kann. Ist der Sekundärkreis als Sperrwandler ausgebildet, so sind Primärwicklung W1 und Sekundärwicklung W2 gegensinnig gepolt. Ist der Sekundärkreis 2 als Durchflußwandler ausgebildet, so sind Primär- und Sekundärwicklung hingegen gleichsinnig gepolt.

Die in den Figuren 3 bis 5 dargestellten Ausführungsbeispiele zeigen jeweils eine Stromversorgungseinrichtung für eine negative Eingangs- bzw. Ausgangsspannung. Prinzipiell sind die gezeigten Stromversorgungseinrichtungen jedoch auch für positive Eingangs- bzw. Ausgangsspannungen anwendbar. Für das in Figur 3 dargestellte Ausführungsbeispiel ergibt sich eine derartige Realisierung dadurch, daß die Schaltungselemente an der von der Ausgangsklemme zur Regeleinrichtung R führenden Verbindungsleitung zu spiegeln sind und der Schalttransistor durch einen entsprechend angepaßten Transistor ersetzt wird.

**Patentansprüche**

1. Stromversorgungseinrichtung zur Erzeugung mindestens einer Ausgangsspannung (Ua) insbesondere aus einer gegenüber der Ausgangsspannung (Ua) betragsmäßig größeren Eingangsspannung (Ue) mit einem Gleichspannungswandler (G) mit einem Primärkreis (1) und mit einem Sekundärkreis (2), wobei der Primärkreis (1) zum Anlegen einer aus Ausgangsspannung (Ua) und Eingangsspannung (Ue) gebildeten Differenzspannung ($U_{C1}$) und der Sekundärkreis (2) zur Erzeugung der Ausgangsspannung (Ua) vorgesehen ist, und wobei der Primärkreis in Reihe mit dem Sekundärkreis (2) geschaltet ist und daß zur Erzeugung der Ausgangsspannung (Ua) ein aus dem Primärkreis (1) gebildeter Längsregler (L) vorgesehen ist,
   dadurch gekennzeichnet,
   daß der Primärkreis (1) parallel zur Primärwicklung (W1) mindestens einen Eingangskondensator (C1) und daß der Sekundärkreis (2) parallel zur Sekundärwicklung (W2) mindestens einen in Reihe zum Eingangskondensator (C1) angeordneten Ausgangskondensator (C2) aufweist, wobei die Reihenschaltung aus dem Eingangskondensator (C1) und aus dem Ausgangskondensator (C2) zum Anlegen der Eingangsspannung (Ue) und der Ausgangskondensator (C2) zum Abgreifen der Ausgangsspannung (Ua) vorgesehen ist.

2. Stromversorgungseinrichtung nach Anspruch 1 oder 2,
   dadurch gekennzeichnet,
   daß der Primärkreis (1) über eine Diode (D1) in Reihe zum Sekundärkreis (2) geschaltet ist.

3. Stromversorgungseinrichtung nach einem der Ansprüche 1 und 2,
   dadurch gekennzeichnet,
   daß der Primärkreis (1) zum Anlegen einer aus Ausgangsspannung (Ua) und Eingangsspannung (Ue) gebildeten Differenzspannung ($U_{C1}$) vorgesehen ist.

4. Stromversorgungseinrichtung nach einem der Ansprüche 1 bis 3,
   dadurch gekennzeichnet,
   daß der Primärkreis (1) eine Primärwicklung (W1) und der Sekundärkreis (2) eine Sekundärwicklung (W2) aufweist, die gleichsinnig gepolt sind.

5. Stromversorgungseinrichtung nach einem der Ansprüche 1 bis 3,
   dadurch gekennzeichnet,
   daß der Primärkreis (1) eine Primärwicklung (W1) und der Sekundärkreis (2) eine Sekundärwicklung (W2) aufweist, die gegensinnig gepolt sind.

6. Stromversorgungseinrichtung nach einem der Ansprüche 1 bis 5,
   dadurch gekennzeichnet,
   daß der Gleichspannungswandler (G) eine Regeleinrichtung (R) zur Steuerung der Einschaltzeiten des steuerbaren Schalters (S) aufweist, wobei zur Erzeugung einer 20 die Regeleinrichtung (R) speisenden Hilfsspannung (Uh) eine weitere Sekundärwicklung (W3) eines Primär- (W1) und Sekundärwicklung (W2) koppelnden Transformators (Tr) vorgesehen ist.

7. Stromversorgungseinrichtung nach einem der Ansprüche 1 bis 6,
   dadurch gekennzeichnet.
   daß der Primärkreis (1) einen steuerbaren Schalter (S) zum Betreiben mit einer hohen Taktfrequenz aufweist.

**Claims**

1. A power supply apparatus for generating at least one output voltage (Ua), in particular from an input voltage (Ue) that is lower in value as compared with the output voltage (Ua), with a direct current converter (G) with a primary circuit (1) and with a secondary circuit (2), wherein the primary circuit (1) is provided for applying a differential voltage ($U_{c1}$), and the secondary circuit (2) is provided for generating the output voltage (Ua), and wherein the primary circuit is disposed in series with the secondary circuit (2), and that for generating the output voltage (Ua) there is provided a series controller (L) formed out of the primary circuit (1),
   characterized in that
   the primary circuit (1) has, parallel to the primary winding (W1), at least one input capacitor (C1) and that the secondary circuit (2) has, parallel to the secondary winding (W2,) at least one output capacitor (C2) arranged in series with the input capacitor (C1), wherein the series connection consisting of the input capacitor (C1) and of the output capacitor (C2) is provided for applying the input voltage (Ue), and the output capacitor (C2) is provided for tapping the output voltage (Ua).

2. A power supply apparatus according to claim 1, characterized in that the primary circuit (1) is connected in series to the secondary circuit (2) via a diode (D1)·

3. A power supply apparatus according to one of claims 1 and 2,
characterized in that
the primary circuit (1) is provided for applying a differential voltage ($U_{c1}$) formed from the output voltage (Ua) and the input voltage (Ue).

4. A power supply apparatus according to one of claims 1 to 3,
characterized in that
the primary circuit (1) has a primary winding (W1) and the secondary circuit (2) a secondary winding (W2) with unidirectional polarities.

5. A power supply apparatus according to one of claims 1 to 3,
characterized in that
the primary circuit (1) has a primary winding (W1) and the secondary circuit (2) a secondary winding (W2) with opposite polarities.

6. A power supply apparatus according to one of claims 1 to 5,
characterized in that
the direct current converter (G) has a control device (R) for controlling the turn-on times of the controllable switch (S), wherein there is provided a further secondary winding (W3) of a transformer (Tr) coupling the primary winding (W1) and secondary winding (W2), for generating an auxiliary voltage (Uh) feeding the control device (R).

7. A power supply apparatus according to one of claims 1 to 6,
characterized in that
the primary circuit (1) has a controllable switch (S) for operation at a high frequency rate.

**Revendications**

1. Dispositif d'alimentation en courant en vue de la génération d'au moins une tension de sortie (Ua) en particulier à partir d'une tension d'entrée (Ue) supérieure à la tension de sortie (Ua), au moyen d'un convertisseur continu-continu (G) comprenant un circuit primaire (1) et un circuit secondaire (2), le circuit primaire (1) étant prévu pour l'application d'une tension de différence ($U_{c1}$) formée à partir de la tension de sortie (Ua) et de la tension d'entrée (Ue), et le circuit secondaire (2) étant prévu pour la génération de la tension de sortie (Ua), le circuit primaire étant monté en série avec le circuit secondaire (2) et en ce qu'en vue de la génération de la tension de sortie (Ua) est prévu un régulateur longitudinal (L) formé par le circuit primaire (1), caractérisé en ce que le circuit primaire (1) présente en parallèle avec l'enroulement primaire (W1) au moins un condensateur d'entrée (C1) et en ce que le circuit secondaire (2) présente en parallèle sur l'enroulement secondaire (W2) au moins un condensateur de sortie (C2) monté en série avec le condensateur d'entrée (C1), le montage série du condensateur d'entrée (C1) et du condensateur de sortie (C2) étant prévu pour l'application de la tension d'entrée (Ue) et le condensateur de sortie (C2) en vue du prélèvement de la tension de sortie (Ua).

2. Dispositif d'alimentation en courant selon la revendication 1, caractérisé en ce que le circuit primaire (1) est monté en série avec le circuit secondaire (2) par l'intermédiaire d'une diode (D1).

3. Dispositif d'alimentation en courant selon l'une des revendications 1 et 2, caractérisé en ce que le circuit primaire (1) est prévu pour l'application d'une tension de différence ($U_{c1}$) formée à partir de la tension de sortie (Ua) et de la tension d'entrée (Ue).

4. Dispositif d'alimentation en courant selon l'une quelconque des revendications 1 à 3, caractérisé en ce que le circuit primaire (1) comporte un enroulement primaire (W1) et le circuit secondaire (2) un enroulement secondaire (W2), de mêmes polarités.

5. Dispositif d'alimentation en courant selon l'une quelconque des revendications 1 à 3, caractérisé en ce que le circuit primaire (1) comporte un enroulement primaire (W1) et le circuit secondaire (2) un enroulement secondaire (W2), de polarités opposées.

6. Dispositif d'alimentation en courant selon l'une quelconque des revendications 1 à 5, caractérisé en ce que le convertisseur continu-continu (G) comporte un dispositif de régulation (R) en vue de la commande des instants de mise en conduction du commutateur commandé (S), en vue de la génération d'une tension auxiliaire (Uh) alimentant le dispositif de régulation (R), un autre enroulement secondaire (W3) d'un transformateur (Tr) couplant l'enroulement primaire (W1) et l'enroulement secondaire (W2) étant prévu.

7. Dispositif d'alimentation en courant selon l'une quelconque des revendications 1 à 6, caractérisé en ce que le circuit primaire (1) comporte un commutateur commandé (S) en vue du fonctionnement à une fréquence d'horloge élevée.

FIG.1

FIG.2

FIG.3

FIG.4

a

b        FIG.5        c